# EUROPEAN PATENT APPLICATION

(11) **EP 2 339 822 A1**
(43) Date of publication of application: **29.06.2011**
(21) Application number: 10190136.1
(22) Date of filing: 05.11.2010
(51) Int. Cl.: H04N 1/00, H04N 1/32, H04L 29/08, H04L 12/28

(54) **Digital Living Network Alliance (DLNA) image reading apparatus and scanning method**

(30) Priority: 13.11.2009 KR 20090109687
(71) Applicant: SAMSUNG ELECTRONICS CO., LTD., Suwon-si, Gyeonggi-do (KR)
(72) Inventor: Shin, Eun-sook, Gyeonggi-do (KR)
(74) Representative: Hewett, Jonathan Michael Richard

(57) **Abstract**

Provided is an image reading apparatus including a DLNA device search unit to search for at least one DLNA device capable of being connected to the image reading apparatus; a communication interface to obtain device information regarding the searched at least one DLNA device; a user interface to receive a scan-to-DLNA command, to display a list of the searched at least one DLNA device, and receive a selection of a DLNA device to which the document is transmitted from among the displayed at least one DLNA device; a scanning unit to generate a scanned image by scanning the document; and a controlling unit to control the communication interface to transmit the scanned image to the selected DLNA device.

## Description

The present invention relates to an image reading apparatus and a scanning method thereof, and more particularly, to an image reading apparatus which uses a digital living network alliance (DLNA) protocol to easily transmit data scanned by a user to various devices in network environment, and a scanning method thereof.

Recently, with the development of network technologies, various digital apparatuses share and utilize contents. A digital living network alliance (DLNA) which defines the protocol to allow devices in digital living environment to share their contents with each other enables a user to conveniently and freely use a network between devices, and devices compatible with a DLNA device have steadily increased.

The DLNA is an organization for standardization of digital information technologies founded to set the standards for compatibility of data such as music, photographs, motion pictures, and so on. The DLNA aims at establishing compatible platforms based on open standards and realizing convergence among services. The DLNA promotes introduction of the guidelines based on UPnP (Universal Plug and Play) which is widely used on many devices such as an appliance, a personal computer, a wireless communication device, and so on.

However, conventional image reading apparatuses are limited to terminals such as a computer or servers which are connected by the protocol capable of being supported by the image reading apparatuses, and thus provide only the function of transmitting scanned data. In addition, to use such a function, a user needs to personally set network information on the device desired to be connected. Therefore, it is not easy to transmit scanned data to various devices over network.

Accordingly, an aspect of the present invention provides an image reading apparatus which uses a DLNA protocol to easily transmit data scanned by a user to various devices over network and an image reading method thereof.

The foregoing and/or other aspects are achieved by providing an image reading apparatus capable of being connected to a digital living network alliance (DLNA) device or an external device over wire or wirelessly and scanning a document, the image reading apparatus including a DLNA device search unit to search for at least one DLNA device capable of being connected to the image reading apparatus; a communication interface to obtain device information regarding the searched at least one DLNA device; a user interface to receive a scan-to-DLNA command, to display a list of the searched at least one DLNA device, and receive a selection of the DLNA device to which the document is transmitted from among the displayed at least one DLNA device; a scanning unit to generate a scanned image by scanning the document; and a controlling unit to control the communication interface to transmit the scanned image to the selected DLNA device.

Additional aspects and/or advantages of the invention will be set forth in part in the description which follows and, in part, will be apparent from the description, or may be learned by practice of the invention.

The scan-to-DLNA command may be input through the external device connected to the image reading apparatus over wire or wirelessly.

Furthermore, if a transmission of the scanned image is completed, the communication interface may receive notification of a completion of the transmission from the DLNA device.

The user interface may display device information corresponding to the searched at least one DLNA device together with the searched at least one DLNA device.

The user interface may display classifiably the searched at least one DLNA device using the obtained device information.

The image reading apparatus may further include an image processing unit to convert the scanned image using the device information corresponding to the selected DLNA device, wherein the controlling unit controls the communication interface to transmit the converted image to the selected DLNA device.

The user interface may receive a setting of a scan option for the document, and the scanning unit may generate the scanned image according to the set scan option.

The image reading apparatus may further include an image processing unit to convert the scanned image, wherein the user interface receives a setting of an image process option for the document, the image processing unit converts the scanned image according to the set image process option, and the controlling unit controls the communication interface to transmit the converted image to the selected DLNA device.

The user interface may display a user interface window including a scan option and an image process option available for the selected DLNA device using the device information corresponding to the selected DLNA device.

The user interface window may include an area to display a preview image to which the selected scan option and image process option are applied.

The image reading apparatus may further include a storage unit to store the scanned image in the image reading apparatus.

The foregoing and/or other aspects may also be achieved by providing a scanning method of an image reading apparatus capable of being connected to a digital living network alliance (DLNA) device or an external device and scanning a document, the scanning method including receiving a scan-to-DLNA command from the image reading apparatus; searching for at least one DLNA device capable of being connected to the image reading apparatus; obtaining device information regarding the searched at least one DLNA device; displaying a list of the searched at least one DLNA device; receiving a selection of DLNA device to which the document is transmitted from among the displayed at least one DLNA device; generating a scanned image comprising scanning the document; and transmitting the scanned image to the selected DLNA device.

The inputting may be input through the external device connected to the image reading apparatus over wire or wirelessly.

The scanning method may further include, if a transmission of the scanned image is completed, receiving notification of a completion of the transmission from the DLNA device.

The displaying may include displaying device information corresponding to the searched at least one DLNA device together with the searched at least one DLNA device.

The displaying may include displaying classifiably the searched at least one DLNA device using the obtained device information.

The scanning method may further include converting the scanned image using the device information corresponding to the selected DLNA device, wherein the transmitting transmits the converted image to the selected DLNA device.

The scanning method may further include receiving a setting of a scan option for the document, wherein the generating generates the scanned image according to the set scan option.

The scanning method may further include receiving a setting of an image process option for the document; and converting the scanned image according to the set image process option, wherein the transmitting comprises transmitting the converted image to the selected DLNA device.

The scanning method may further include displaying a user interface window including a scan option and an image process option available for the selected DLNA device using the device information corresponding to the selected DLNA device.

The user interface window may include an area to display a preview image to which the selected scan option and image process option are applied.

The scanning method may further include storing the scanned image in the image reading apparatus.

These and/or other aspects and advantages will become apparent and more readily appreciated from the following description of the embodiments, taken in conjunction with the accompanying drawings, of which:
FIG. 1 is a block diagram illustrating an image reading apparatus according to an exemplary embodiment;
FIGS. 2 to 4 are views illustrating various examples of a user interface (UI) window displayed on a user interface;
FIG. 5 is a flowchart provided to explain a scanning method according to an exemplary embodiment; and
FIG. 6 is a view illustrating the transmitting operation of FIG. 5 in detail.

Reference will now be made in detail to the exemplary embodiments, examples of which are illustrated in the accompanying drawings, wherein like reference numerals refer to like elements throughout. The embodiments are described below, in order to explain the present invention by referring to the figures.

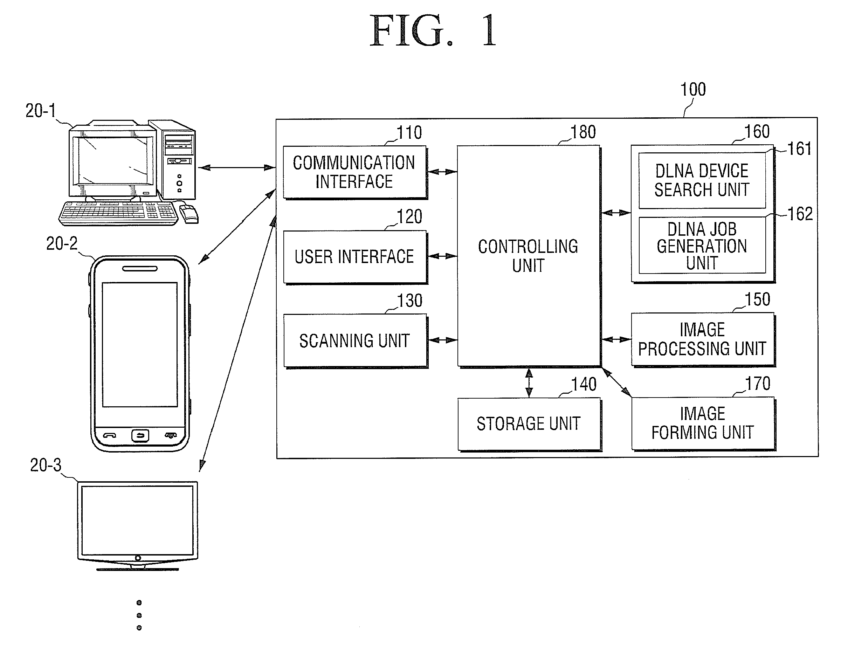

FIG. 1 is a block diagram illustrating an image reading apparatus according to an exemplary embodiment.

Referring to FIG. 1, an image reading apparatus 100 is illustrated. The image reading apparatus 100 is a digital living network alliance (DLNA) device which shares contents with other DLNA devices 20-1, 20-2, 20-3 ... over a network. For example, the image reading apparatus 100 may be one of a digital media server (DMS), a digital media player (DMP), and a digital media renderer (DMR). Herein, the DMS performs the function of a media server device (MSD) in an area of UPnP AV (Audio and Video), that is the function of providing digital media contents, and searches for items of the digital media contents in the DMS so that a user using the DLNA network displays or divides contents. For example, the DMS may include a video cassette recording (VCR) device, a compact disc (CD) player, a digital versatile disc (DVD) player, an MPEG (Moving Picture Experts Group) layer 3 (MP3) player, a set-top box (STB), a television (TV) tuner, a radio tuner, a personal computer (PC), and so on. The DMR executes the selected media, and includes a TV, a stereo speaker, and so on. The DMP is a DMR including a (UPnP control point (CP), and performs the functions of a media renderer device (MRD) and a media render control point (MRCP). That is, the DMP selects media contents and controls the selected media contents to be executed.

Specifically, the image reading apparatus 100, that is, the DLNA device, includes a communication interface 110, a user interface 120, a scanning unit 130, a storage unit 140, an image processing unit 150, a DLNA agent 160, an image forming unit 170, and a controlling unit 180.

The communication interface 110 is connected to a DLNA network, and shares contents with the other DLNA devices 20-1, 20-2, 20-3 ... on the DLNA network. In more detail, the communication interface 110 may communicate with the other DLNA devices 20-1, 20-2, 20-3 ... on the DLNA network according to the UPnP protocol, and receive contents stored in the other DLNA devices 20-1, 20-2, 20-3.

The communication interface 110 may search for connectable DLNA devices. In more detail, the communication interface 110 searches for DLNA devices on the DLNA network under the control of a DLNA device search unit 161, which will be explained later, and obtains device information regarding the searched DLNA device.

Herein, the device information includes the type of contents supported by the DLNA device, the maximum size of the contents, the resolution of the contents, the address of the device, the type of the device, the function supported by the device, the storage capacity of the device, and so on. Hereinbelow, the device information regarding the searched DLNA device will be referred to as the information.

The communication interface 110 transmits an image generated by a scanning operation or a converted image to the selected DLNA device. Specifically, the communication interface 110 transmits the scanned image generated by the scanning unit 130 or the image converted by the image processing unit 150 to the DLNA device selected by a user under the control of a DLNA job generation unit 162, which will be explained later.

The communication interface 110 may be notified of the completion of transmission from the DLNA device which has received the scanned image. If the communication interface 110 is not notified of the completion of transmission within a predetermined period of time, the communication interface 110 may re-transmit the scanned image or the converted image.

The user interface 120 includes a plurality of function keys with which a user sets or selects various functions supported by the image reading apparatus 100, and displays various information provided by the image reading apparatus 100. The user interface 120 may be implemented as a device such as a touch pad which is configured to support concurrent input and output, or a device combining functions of a mouse and a monitor.

The user interface 120 receives a scan-to-DLNA command from a user. The scan-to-DLNA command is a user command to scan a document, and to transmit the scanned document to another DLNA device. The scan-to-DLNA command may be received through the user interface 120 in the image reading apparatus 100, or received through external devices connected to the image reading apparatus 100 over wire or wirelessly.

The user interface 120 displays at least one searched DLNA device. The user interface 120 may display a list listing the DLNA devices searched by the DLNA device searching unit 161, which will be explained later. The user interface 120 may display information corresponding to the searched at least one DLNA device together with the searched at least one DLNA device. The user interface 120 may classifiably display the searched at least one DLNA device using the obtained information regarding the DLNA device. In more detail, the user interface 120 displays classifiably the DLNA devices searched by the DLNA device searching unit 161 using the information regarding the DLNA device obtained through the communication interface 110, and displays the information together with the DLNA device. For example, a plurality of DLNA devices are searched, the user interface 120 displays the DLNA devices classifiably according to the type of device, or displays the DLNA devices in the order of the storage capacity. As described above, since the searched DLNA devices are displayed together with the information regarding the DLNA device, a user may easily select a desired DLNA device.

The user interface 120 receives a selection of a DLNA device to which a document will be transmitted from among the searched at least one DLNA device. In this situation, the user interface 120 may receive a selection of a plurality of DLNA devices as well as a single DLNA device to which a document will be transmitted.

The user interface 120 displays a user interface window including a scan option and/or an image process option that a user can select. Specifically, the user interface 120 displays a user interface window so that a user sets a scan option and/or an image process option. In this case, the user interface 120 may display only the scan option and/or the image process option which is available for the selected DLNA device using the information regarding the selected DLNA device. The user interface 120 may be implemented to display all of the selectable options, and to display an icon preset for unavailable options for the selected DLNA device.

Herein, the scan option is an option related to a scanning operation of the scanning unit 130 such as a scan area or a scan resolution. The scan option may be a scan area, a scan resolution, a color scanning, a double sided scanning, and so on. The image process portion is an option related to the function to be performed on the image processing unit 150 according to a user selection. For example, the image process option may be a color compensation, a black and white scanning, a file property of a scanned image, and so on.

The user interface 120 may display a preview image to which the image process options and the scan options selected by a user have been applied. Therefore, a user may easily select scan options.

The scanning unit 130 scans a document and generates scanned data. The scanning unit 130 may be implemented in the type of flat bed scanner or automatic document feeder (ADF). The scanning unit 130 reads a document on the flat bed scanner or a document which is input to the ADF, and generates digital image data.

The scanning unit 130 generates a scanned image according to the set options. In more detail, the scanning unit 130 scans a document according to the options set through the user interface 120.

The storage unit 140 stores a scanned image. Specifically, the storage unit 140 stores a scanned image which is generated by the scanning unit 130. The storage unit 140 stores a scanned image which is converted by the image processing unit 150 to be explained later. The storage unit 140 may temporarily store a DLNA job which is generated by the DLNA job generation unit 162. The storage unit 140 may be implemented as a storage medium in the image reading apparatus 100 or an external storage medium such as a removable disc including a universal serial bus (USB) memory.

The image processing unit 150 processes digital image data using the information regarding the selected DLNA device. In more detail, the image processing unit 150 processes the scanned image generated by the scanning unit 130 using the information regarding the DLNA device obtained by the DLNA device search unit 161. For instance, if the DLNA device 20-2 selected by a user supports a JPEG (Joint Photographic Experts Group) file only, the image processing unit 150 may convert the digital image data generated by the scanning unit 130 into a file of a JPEG format. Such image processing may be performed by a user selection as well as performed automatically.

The image processing unit 150 converts the scanned image according to the image process options selected by a user. In more detail, the image processing unit 150 converts the scanned image generated by the scanning unit 130 according to the image process options selected by a user through the user interface 120. For instance, the image processing unit 150 may perform enlargement, reduction, and cropping, which are related to the image size processing, perform color compensation, luminance adjustment, and brightness adjustment, which are related to the image color processing, perform file format conversion, or combine a plurality of images into a single image. The image processing unit 150 performs not only the above image processing but also various image processing that usual image reading apparatuses can perform.

The DLNA agent 160 searches for DLNA devices connected over the DLNA network, and generates a DLNA job to transmit data which is proper for the DLNA standard. The DLNA agent 160 includes the DLNA device search unit 161 and the DLNA job generation unit 162.

The DLNA device search unit 161 searches for DLNA devices connected over the DLNA network, and obtains information regarding the searched DLNA devices. The DLNA device search unit 161 searches for DLNA devices connected over the DLNA network using the communication interface 110. The DLNA device search unit 161 may obtain information regarding each of the DLNA devices which are searched using the communication interface 110. The obtained information regarding the DLNA devices may be provided to the image processing unit 150. For example, if the searched DLNA device 20-2 supports contents of a JPEG format only, the DLNA device search unit 161 transmits such information to the image processing unit 150 to convert a scanned image into a jpf (JPEG200) format. If the searched DLNA device 20-3 has the storage capacity less than 2MB, the DLNA device search unit 161 transmits such information to the image processing unit 150 in order to adjust a scanned image to have the capacity less than 2MB. The DLNA device search unit 161 may be implemented using the simple service discovery protocol (SSDP) on the UPnP protocol and or the hypertext transfer protocol (HTTP).

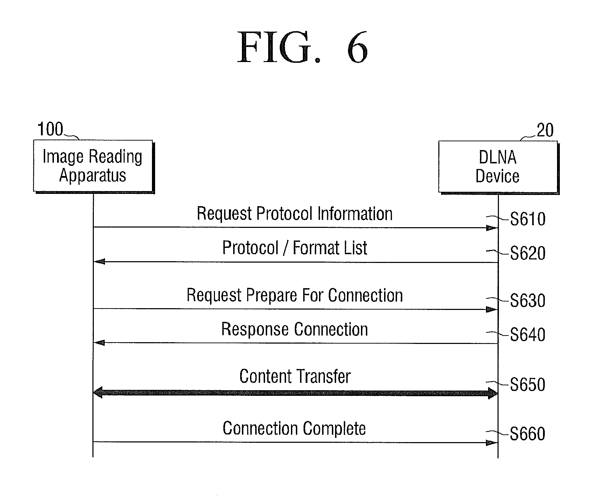

The DLNA job generation unit 162 controls the communication interface 110 to transmit a scanned image to a selected DLNA device. The operation of transmitting a scanned image will be explained later in detail with reference to FIG. 6.

The image forming unit 170 prints a scanned image. In more detail, the image forming unit 170 may print an image scanned by the scanning unit 130 or an image converted by the image processing unit 150 according to an option selected by a user. The image reading apparatus 200 according to the exemplary embodiment may be a multifunction peripheral (MFP) including functions of scanning, copying, faxing, and printing, a scanner, or a fax machine.

The controlling unit 180 controls operations related to the function of the image reading apparatus 100. In more detail, if a user inputs a scan-to-DLNA command, the controlling unit 180 may control the user interface 120, the scanning unit 130, the image processing unit 150, and the DLNA agent 160 to perform the operations. The controlling unit 180 controls the DLNA job generation unit 162 and the communication interface 110 to transmit the image scanned by the scanning unit 130 or the image converted by the image processing unit to the selected DLNA device.

If a user selects a scan option and an image process option for an image, the controlling unit 180 may control the scanning unit 130 and the image processing unit 150 so that the options selected by the user are applied to the image. In this situation, the controlling unit 180 may control the user interface 120 to display a preview image to which the scan option and the image process option selected by the user have been applied. Therefore, the user can select the options related to the scanning operation conveniently and easily.

Prior to applying the scan option and the image process option to the image, the controlling unit 180 may determine if the scan option and the image process option selected by a user are available on the selected DLNA device. In more detail, if the option selected by a user causes contents to be unavailable on the DLNA device selected by a user, the controlling unit 180 controls the user interface 120 to display such situation. For instance, if a user selects the option to convert digital image data into a portable network graphics (PNG) file while using the DLNA device which can read only the JPG file, the controlling unit 180 controls the user interface 120 to warn a user against the unavailability of the option.

The controlling unit 180 controls the storage unit 130 to store the image scanned by the scanning unit 130 or the image converted by the image processing unit 150. If the controlling unit 180 is not notified of the completion of transmission from the selected DLNA device within a predetermined period of time after a scanned image is transmitted, the controlling unit 180 may control the communication interface 110 to re-transmit the scanned image. The above operation may be repeated a predetermined number of times, and if the completion of transmission is not notified until the operation is repeated the predetermined number of times, the controlling unit 180 stores the scanned image in the storage unit 130, and controls the user interface 120 to display unsuccessful transmission of the scanned image.

As described above, the image reading apparatus 100 according to the exemplary embodiment sets network between other devices by itself, and thus a user easily transmits data scanned by the image reading apparatus 100 to various DLNA devices only by selecting a DLNA device. Therefore, user's convenience is improved.

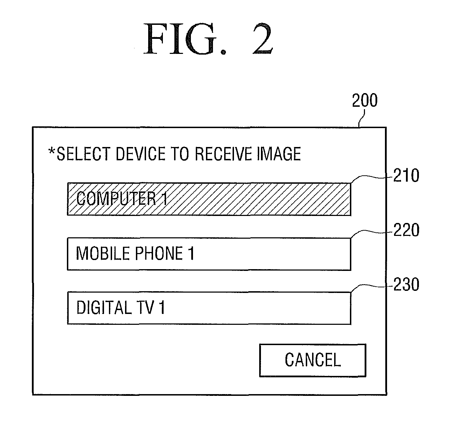

FIGS. 2 to 4 are views illustrating various examples of a user interface (UI) window displayed on a user interface.

FIG. 2 shows a UI window which displays DLNA devices searched by the DLNA device search unit 161. Referring to FIG. 2, a UI window 200 which displays three DLNA devices 210, 220, 230 is illustrated. A user selects at least one of the displayed DLNA devices 210, 220, 230 to be a destination to which the user transmits scanned data. Only the DLNA devices are displayed in the list type in this exemplary embodiment, but information regarding each of the DLNA devices may be displayed together with the searched DLNA devices.

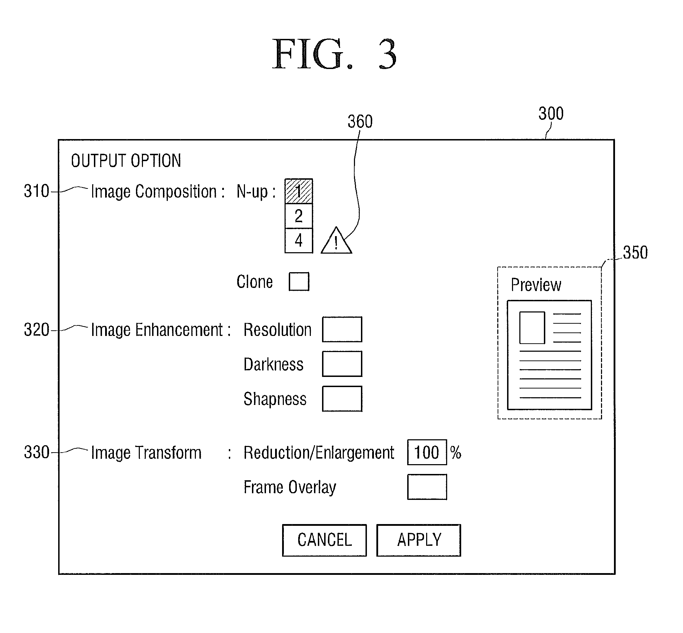

FIG. 3 shows a UI window 300 to receive a selection of a scan option and an image process option according to an exemplary embodiment. Referring to FIG. 3, the UI window 300 includes option selection areas 310, 320, 330 on which a user selects a scan option and an image process option, and a preview area 350 to display a preview image to which the selected option is applied. Only the UI window to receive a setting of image process option is provided in this exemplary embodiment, but the area to receive a setting of scan option may be displayed on the window, and other image process options may further displayed on the window. Alternatively, the exemplary embodiment may be implemented in such a manner that the process of selecting the options is automatically performed without showing the process to a user.

In applying options, the scan option and the image process option which cause the possibility that the selected DLNA device cannot read contents may be displayed together with a preset icon 360 as illustrated in FIG. 3, thereby enabling a user to easily select available options. The exemplary embodiment may be implemented in such a manner of hiding unavailable options instead of displaying the preset icon.

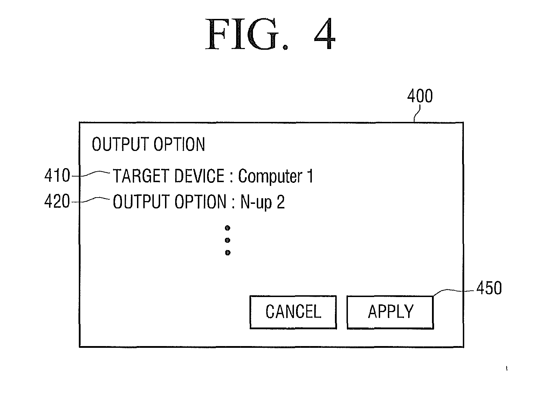

FIG. 4 shows a UI window 400 which appears after a user selects a DLNA device and various options. Referring to FIG. 4, the UI window 400 which displays information regarding the options selected by a user on FIGS. 2 and 3 is illustrated. Through the UI window 400, a user may recognize if the selected DLNA device and the set options are appropriate.

As described above, a user transmits scanned data to various DLNA devices only by selecting the DLNA devices on a UI window, and thus user's convenience is improved.

In the exemplary embodiment with reference to FIGS. 1 to 4, scanned data are transmitted to a single DLNA device. However, the exemplary embodiments may be implemented to transmit scanned data to two or more DLNA devices at the same time.

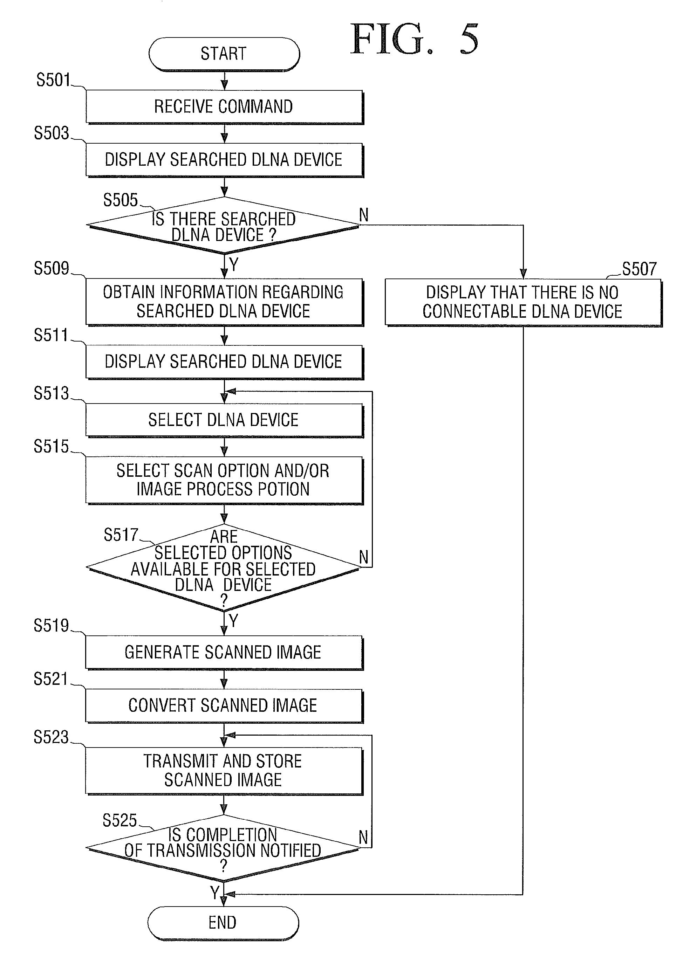

FIG. 5 is a flowchart provided to explain a scanning method according to an exemplary embodiment.

If a user inputs a scan-to-DLNA command in operation S501, at least one DLNA device connectable to the image reading apparatus 100 may be searched in operation S503.

If the search results show that there is no DLNA device connectable to the image reading apparatus 100 in operation S505-N, the image reading apparatus 100 may display that there is no connectable DLNA device in operation S507. On the other hand, if DLNA devices connectable to the image reading apparatus 100 are searched in operation S505-Y, the image reading apparatus 100 may obtain information regarding the searched DLNA devices in operation S509.

The searched DLNA devices are displayed in operation S511. In this situation, the information regarding the searched at least one DLNA device may be displayed together with the searched at least one DLNA device using the obtained information regarding the DLNA device. The searched at least one DLNA device may be classifiably displayed using the obtained information regarding the DLNA devices. As described above, the searched DLNA devices are displayed using the information regarding the DLNA devices, and thus a user easily selects a desired DLNA device.

The DLNA device to which a document will be transmitted is selected from among the displayed at least one DLNA device in operation S513. In more detail, a user may select one or more DLNA devices to which a document will be transmitted.

A user sets a scan option and/or an image process potion for a document in operation S515. Specifically, a UI window having a scan option and/or an image process potion is displayed, and then a user sets a scan option and/or an image process option through the displayed UI window. Only the scan option and/or the image process option available for the selected DLNA device may be displayed using information regarding the selected DLNA device. The exemplary embodiment may be implemented to display all of the options capable of being selected by a user and a preset icon close by unavailable options. A preview image to which the options selected by a user have been applied may be displayed.

If the scan option and/or the image process option selected by a user are unavailable for the selected DLNA device in operation S517, the image reading apparatus 100 may display that the options are not available, and the user may change the selected options or select another DLNA device.

The document is scanned and the scanned image is generated in operation S519. In more detail, the image reading apparatus 100 may read the document on the flat bed scanner or the document input to the ADF, and generate the scanned image. If a user sets a scan option, the image reading apparatus 100 may generate a scanned image according to the set scan option. The operation of scanning a document may be performed prior to the operation of selecting a DLNA device and options.

The scanned image is converted using the information regarding the selected DLNA device in operation S521. In more detail, the image reading apparatus 100 may process the scanned image using the information of the selected DLNA device. For example, if the DLNA device 20-2 selected by a user supports only the JPEG file, the image reading apparatus 100 converts the scanned image into a file of a JPEG format. If a user selects an image process option, the image reading apparatus 100 converts the scanned image according to the selected image process option.

The image reading apparatus 100 transmits the scanned image or the converted image to the selected DLNA device in operation S523. The operation of transmitting the scanned image to the selected DLNA device will be explained later in detail with reference to FIG. 6. The scanned image or the converted image which is generated according to a user selection may be stored in the image reading apparatus 100.

If the image reading apparatus 100 is not notified of the completion of transmission from the selected DLNA device despite transmitting the scanned image, the scanned image or the converted image may be re-transmitted in operation S525. The operation may be repeated a predetermined number of times.

In the scanning method according to the exemplary embodiment, a user transmits the scanned data to various DLNA devices only by selecting a DLNA device, and thus user's convenience is improved. The scanning method of FIG. 5 is performed on the image reading apparatus 100 of FIG. 1, and is also possible on other image reading apparatuses.

FIG. 6 is a view illustrating the transmitting operation of FIG. 5 in detail.

Referring to FIG. 6, if an image is scanned or a scanned image is converted, the image reading apparatus 100 requests the selected DLNA device 20 for protocol information in operation S610. In response to the request, the selected DLNA device 20 may transmit information regarding data to be transmitted, for example, a format or a protocol of the data. The information such as a protocol of the data may be included in the information regarding the selected DLNA device, that is, the information may be transmitted previously to the image reading apparatus 100 as the information regarding the selected DLNA device. In this case, operations S610 and S620 may be omitted.

The image reading apparatus 100 requests that the selected DLNA device 20 prepare connection to the image reading apparatus 100 in operation S630, and, if the image reading apparatus 100 receives 'Response Connection' from the selected DLNA device 20 in operation S640, transmits the scanned image or the converted image to the selected DLNA device 20 using the received information in operation S650.

If image transmission is completed through the above operations, the image reading apparatus 100 notifies the selected DLNA device 20 of the completion of selected image transmission by transmitting 'connection complete' to the selected DLNA device 20.

Although a few embodiments have been shown and described, it would be appreciated by those skilled in the art that changes may be made in these embodiments without departing from the principles of the invention, the scope of which is defined in the claims.

## Claims

1. An image reading apparatus capable of being connected to a digital living network alliance (DLNA) device or an external device over wire or wirelessly and scanning a document, the image reading apparatus comprising:
a DLNA device search unit to search for at least one DLNA device capable of being connected to the image reading apparatus;
a communication interface to obtain device information regarding the searched at least one DLNA device;
a user interface to receive a scan-to-DLNA command, to display a list of the searched at least one DLNA device, and receive a selection of the DLNA device to which the document is transmitted from among the displayed at least one DLNA device;
a scanning unit to generate a scanned image by scanning the document; and
a controlling unit to control the communication interface to transmit the scanned image to the selected DLNA device.

2. The image reading apparatus of claim 1, wherein the user interface displays device information corresponding to the searched at least one DLNA device together with the searched at least one DLNA device.

3. The image reading apparatus of claim 1 or 2, further comprising:
an image processing unit to convert the scanned image using the device information corresponding to the selected DLNA device,
wherein the controlling unit controls the communication interface to transmit the converted image to the selected DLNA device.

4. The image reading apparatus of one of claims 1 to 3, wherein the user interface receives a setting of a scan option for the scanned document, and the scanning unit generates the scanned image according to the set scan option.

5. The image reading apparatus of one of claims 1 to 3, further comprising:
an image processing unit to convert the scanned image,
wherein the user interface receives a setting of an image process option for the scanned document,
the image processing unit converts the scanned image according to the set image process option, and
the controlling unit controls the communication interface to transmit the converted image to the selected DLNA device.

6. The image reading apparatus of claim 5, wherein the user interface displays a user interface window including a scan option and an image process option available for the selected DLNA device using the device information corresponding to the selected DLNA device.

7. The image reading apparatus of claim 6, wherein the user interface window comprises an area to display a preview image to which the selected scan option and image process option are applied.

8. A scanning method of an image reading apparatus capable of being connected to a digital living network alliance(DLNA) device or an external device and scanning a document, the scanning method comprising:
receiving a scan-to-DLNA command from the image reading apparatus;
searching for at least one DLNA device capable of being connected to the image reading apparatus;
obtaining device information regarding the searched at least one DLNA device;
displaying a list of the searched at least one DLNA device;
receiving a selection of a DLNA device to which the document is transmitted from among the displayed at least one DLNA device;
generating a scanned image comprising scanning the document; and
transmitting the scanned image to the selected DLNA device.

9. The scanning method of claim 8, wherein the displaying comprises displaying device information corresponding to the searched at least one DLNA device together with the searched at least one DLNA device.

10. The scanning method of claim 8 or 9, further comprising:
converting the scanned image using the device information corresponding to the selected DLNA device,
wherein the transmitting comprises transmitting the converted image to the selected DLNA device.

11. The scanning method of one of claims 8 to 10, further comprising:
receiving a setting of a scan option for the document,
wherein the generating comprises generating the scanned image according to the set scan option.

12. The scanning method of one of claims 8 to 10, further comprising:
receiving a setting of an image process option for the document; and
converting the scanned image according to the set image process option,
wherein the transmitting comprises transmitting the converted image to the selected DLNA device.

13. The scanning method of claim 11 or 12, further comprising:
displaying a user interface window including a scan option and an image process option available for the selected DLNA device using the device information corresponding to the selected DLNA device.

14. The scanning method of claim 13, wherein the user interface window comprises an area to display a preview image to which the selected scan option and image process option are applied.

15. The scanning method of one of claims 8 to 14, further comprising:
storing the scanned image in the image reading apparatus.
